(19) Europäisches Patentamt / European Patent Office / Office européen des brevets

(11) **EP 1 777 202 A2**

(12) **EUROPEAN PATENT APPLICATION**

(43) Date of publication:
   **25.04.2007 Bulletin 2007/17**

(51) Int Cl.:
   **C03C 25/42** (2006.01)

(21) Application number: **06122539.7**

(22) Date of filing: **18.10.2006**

(84) Designated Contracting States:
   **AT BE BG CH CY CZ DE DK EE ES FI FR GB GR
   HU IE IS IT LI LT LU LV MC NL PL PT RO SE SI
   SK TR**
   Designated Extension States:
   **AL BA HR MK YU**

(30) Priority: **20.10.2005 JP 2005305134
   04.08.2006 JP 2006213484**

(71) Applicant: **Nisshinbo Industries, Inc.
   Chuo-ku,
   Tokyo 103-8650 (JP)**

(72) Inventors:
   • **Oba, Masayoshi
   Okazaki-shi
   Aichi (JP)**
   • **Inoue, Hiroshi
   Okazaki-shi
   Aichi (JP)**
   • **Fukuda, Jiro
   Okazaki-shi
   Aichi (JP)**

(74) Representative: **Behnisch, Werner
   Reinhard-Skuhra-Weise & Partner GbR,
   Friedrichstrasse 31
   80801 München (DE)**

(54) **Process for producing zeolite-coated glass fibers and fibrous structure produced by the same**

(57)   The invention provides: a process for producing zeolite-coated glass fibers in which a silicon compound and an aluminum compound can be simultaneously imparted to glass fibers through one immersion treatment to conduct a zeolite-yielding reaction; and a fibrous structure produced by the process.

The process for producing zeolite-coated glass fibers of the invention comprises treating glass fibers with an aqueous solution which contains a silicon compound, an aluminum compound, and sodium hydroxide each dissolved therein, the total amount (Y) of the silicon compound and the aluminum compound in terms of silicon oxide and aluminum oxide, respectively, being 0.0703-1.6403% by mass and the sodium hydroxide concentration (X) in the aqueous solution being 4-15% by mass, the relationship between the total amount (Y) in terms of the sum of silicon oxide and aluminum oxide and the sodium hydroxide concentration (X) being represented by the following expression (I).

$$Y \leq 0.1427X - 0.5006 \qquad (I)$$

EP 1 777 202 A2

**Description**

FIELD OF THE INVENTION

The present invention relates to a production process for yielding zeolite crystals on the surface of glass fibers and to a zeolite-coated glass fiber structure produced by the process.

BACKGROUND ART

A process for producing zeolite-coated glass fibers which has been proposed comprises immersing silica-alumina glass fibers in a reaction mixture slurry comprising a silica source, alumina source, alkali source, and water to produce the target fibers.

Although this prior-art process has a problem that a powdery zeolite generates as a by-product in a large amount, a method for overcoming this problem has been proposed. This method comprises heating silica-alumina glass fibers in an aqueous sodium hydroxide solution to crystallize a zeolite on the surface of the glass fibers (see patent documents 1 and 2).

However, the method disclosed in patent documents 1 and 2, which comprises heating silica-alumina glass fibers in an aqueous sodium hydroxide solution to crystallize a zeolite on the surface of the glass fibers, has a problem that the amount of the glass fibers decreases because the aluminum oxide and silicon oxide as materials of the glass fibers are used as raw materials for the zeolite. The method further has a problem that the loss of the glass fibers makes the glass fibers brittle.

[Patent Document 1] JP-A-11-217241

[Patent Document 2] JP-A-2001-39740

SUMMARY OF THE INVENTION

The invention has been achieved under those circumstances. An object of the invention is to provide a process for producing zeolite-coated glass fibers in which a silicon compound and an aluminum compound can be simultaneously imparted to glass fibers through one immersion treatment to conduct a zeolite-yielding reaction. Another obj ect of the invention is to provide a fibrous structure produced by the process.

The present inventors made intensive investigations in order to accomplish those objects. As a result, they found that when an aqueous sodium hydroxide solution containing an aluminum compound, e.g., sodium aluminate, dissolved therein is mixed with an aqueous solution of a silicon compound, e.g., sodium silicate, in such a manner that the aluminum compound, silicon compound, sodium hydroxide, and water are used so as to result in a total amount of the dissolved silicon compound and aluminum compound in terms of silicon oxide and aluminum oxide, respectively, of 0.0703-1.6403% by mass based on the aqueous solutions and in a sodium hydroxide concentration of 4-15% by mass, then a transparent homogeneous aqueous mixture solution is obtained. It was further found that by treating glass fibers with this aqueous mixture solution, the aluminum compound and the silicon compound can be simultaneously imparted to the glass fibers, and that by reacting the two compounds under moist conditions with heating, a zeolite can be yielded on the surface of the glass fibers. The invention has been achieved based on these findings.

The invention provides the following process for producing zeolite-coated glass fibers and the following fibrous structure produced by the process.

(1) A process for producing zeolite-coated glass fibers, which comprises treating glass fibers with an aqueous solution which contains a silicon compound, an aluminum compound, and sodium hydroxide each dissolved therein, the total amount (Y) of the silicon compound and the aluminum compound in terms of silicon oxide and aluminum oxide, respectively, being 0.0703-1.6403% by mass and the sodium hydroxide concentration (X) in the aqueous solution being 4-15% by mass, the relationship between the total amount (Y) in terms of the sum of silicon oxide and aluminum oxide and the sodium hydroxide concentration (X) being represented by the following expression (I).

$$Y \leq 0.1427X - 0.5006 \qquad\qquad (I)$$

(2) The process for producing zeolite-coated glass fibers according to the above (1), which comprises immersing glass fibers in the aqueous solution and then heating the glass fibers with moistening to react the silicon compound with the aluminum compound on the surface of the glass fibers and thereby yield zeolite crystals.

(3) The process for producing zeolite-coatedglass fibers according to the above (1) or (2), wherein the silicon compound is sodium silicate and the aluminum compound is sodium aluminate.

(4) A fibrous structure made of zeolite-coated glass fibers produced by the process as described under any one of the above (1) to (3), the fibrous structure being a cottony product, a yarn, a woven fabric, or a nonwoven fabric.

According to the invention, an aluminum compound and a silicon compound can be imparted to glass fibers by conducting a treatment with one liquid once and be caused to undergo a zeolite-yielding reaction. Because of this, zeolite-coated glass fibers can be easily obtained.

DETAILED DESCRIPTION OF THE INVENTION

The processing liquid for glass fibers which is to be used in the invention is an aqueous solution for impregnating glass fibers or a fibrous structure comprising glass fibers therewith in order to yield a zeolite on the surface of the glass fibers. This aqueous solution is an aqueous sodium hydroxide solution which contains a silicon compound and an aluminum compound dissolved therein, the total amount (Y) of the silicon compound and the aluminum compound in terms of silicon oxide ($SiO_2$) and aluminum oxide ($Al_2O_3$), respectively, being 0.0703-1.6403% by mass, and which has a sodium hydroxide concentration of 4-15% by mass.

In case where the total amount (Y) is smaller than 0. 0703% by mass, the amount of the zeolite which can be synthesized is small. In case where the total amount (Y) is larger than 1.6403% by mass, the silicon compound and the aluminum compound partly remain unutilized. In case where the sodium hydroxide concentration is lower than 4% by mass, the physical change of the glass fibers is too slight and zeolite synthesis on the surface of the glass fibers does not proceed. In case where the sodium hydroxide concentration is higher than 15% by mass, the glass fibers undergo too large a physical change, resulting in, e.g., a loss of glass, embrittlement, and the like. Furthermore, sodium hydroxide concentrations lower than 7% by mass result in a low efficiency of zeolite synthesis, while sodium hydroxide concentrations exceeding 12% by mass result in a decrease in ion-exchange performance. Consequently, the concentration of sodium hydroxide is more preferably 7-12% by mass.

In this case, it is preferred to use the silicon compound and the aluminum compound in a proportion of from 1: 0.2 to 1:2, especially from 1:0.8 to 1:1.5, in terms of mass ratio.

As the silicon compound, can be used sodiummetasilicate, potassium metasilicate, water glass, silica sol, or the like. On the other hand, examples of the aluminum compound include sodium aluminate, potassium aluminate, aluminum sulfate, aluminum chloride, and aluminum nitrate.

For example, it is preferred to use sodium metasilicate and sodium aluminate as the silicon compound and the aluminum compound, respectively, in yielding a zeolite on the surface of glass fibers.

The processing liquid for glass fibers can be obtained by preparing an aqueous sodium hydroxide solution containing an aluminum compound dissolved therein and an aqueous solution of a silicon compound and mixing the two solutions so that the resultant mixture solution has an aluminum compound amount, silicon compound amount, and sodium hydroxide concentration in the respective ranges shown above. Thus, the processing liquid can be obtained as a transparent homogeneous aqueous mixture solution. The same results are obtained also by mixing an aqueous solution of an aluminum compound with an aqueous aluminum hydroxide solution containing a silicon compound dissolved therein.

The mixing may be conducted at room temperature or may be conducted with heating at about 30-90°C.

The processing liquid to be used in the invention is substantially transparent and homogeneous as stated above. The viscosity thereof as measured at 25°C with a Brookfield viscometer is as low as about 2 mPa·s or below. This processing liquid is used for treating glass fibers.

The production process is as follows. Glass fibers are treated with the processing liquid, for example, by immersing the glass fibers in the processing liquid to thereby impart the silicon compound and the aluminum compound to the surface of the glass fibers. According to need, these glass fibers are aged at room temperature. Thereafter, the glass fibers are heated with moistening to thereby react the silicon compound with the aluminum compound in the presence of water vapor. Thus, a zeolite is formed on the surface of the glass fibers.

In this case, the kind and thickness of the glass fibers are not particularly limited. The invention is especially effective in the treatment of a silica-alumina glass fiber structure having a glass fiber thickness of 10 $\mu$m or larger.

Examples of the glass fibers include various glass fibers which differ in the contents of silicon dioxide, aluminum oxide, calcium oxide, etc. Such various kinds of glass fibers may be used alone or as a mixture of two ormore thereof. Furthermore, other fibers selected fromnatural fibers, regenerated cellulose fibers, semi-synthetic fibers, synthetic fibers such as nylon, polyester, and polyamide fibers, and the like may be mixed with the glass fibers and used, as long as this does not defeat the objects of the invention.

Examples of the structure comprising such glass fibers include cottony products, yarns, woven fabrics, and nonwoven fabrics. Specific examples thereof include woven fabrics obtained by weaving the glass fibers, such as a plain weave fabric, twill fabric, and satin fabric, and nonwoven fabrics. Such fibrous structures can be subjected to treatments, e.g., dyeing, according to need.

In this case, the glass-fiber-processing liquid to be used for treating the glass fibers and such a structure of glass fibers preferably is an aqueous sodium hydroxide solution which contains a silicon compound and an aluminum compound dissolved therein, the total amount (Y) of the silicon compound and the aluminum compound in terms of silicon oxide and aluminum oxide, respectively, being 0.0703-1.6403% by mass, and which has a sodium hydroxide concentration of 4-15% by mass. The reasons for this are as follows. In case where the sodium hydroxide concentration is too high, the material of the glass fibers partly dissolves away, resulting in embrittlement and a glass loss. In case where the sodium hydroxide concentration is too low, there is a possibility that the conversion into a zeolite might decrease.

Methods for impregnating a glass fiber structure with the aqueous solution are not particularly limited, and any of the padding method, coating method, spraying method, immersion method, and the like may be used. However, it is especially preferred to employ the padding method because it has excellent processing efficiency (productivity).

After a glass fiber structure is impregnated with the processing liquid, it is aged at room temperature preferably for 4-20 hours and then heated with moistening. Conditions for the heating with moistening preferably include a temperature of 60-100°C, especially 70-90°C, and a period of 0.5-20 hours, especially 1-3 hours. The heating with moistening can be conducted, for example, by a method in which the glass fiber structure or the like impregnated with the processing liquid is placed in a closed space and heated at that temperature. By this heating, the silicon compound can be efficiently reacted with the aluminum compound and crystal growth can hence be accelerated.

After completion of the reaction, the glass fibers preferably are washed with water having a temperature of 30-90°C to remove crystals deposited on the surface and then dried.

In forming zeolite crystals on the surface of the glass fibers, metal ions such as copper ions, silver ions, zinc ions, nickel ions, palladium ions, manganese ions, magnesium ions, calcium ions, or the like can be introduced (by ion exchange) into the zeolite crystals. When metal ions such as copper ions, silver ions, or zinc ions are to be thus introduced (by ion exchange) into the zeolite crystals, use can be made of a method in which an aqueous solution containing a salt of such a metal, e.g., copper ions, in a concentration of 0.1-1.0% by mass, especially 0.2-0.6% by mass, is prepared and this aqueous solution is applied to the glass fiber structure in which zeolite crystals have been yielded. In this case, salts of those metals may be used alone or in combination of two or more thereof.

Methods for applying the aqueous solution to the fibrous structure are not particularly limited. Examples thereof include the immersion method, coating method, padding method, and spraying method. It is preferred to use the immersion method or the padding method.

After the aqueous solution of metal ions is applied to the fibrous structure, this fibrous structure is washed with hot water of 50-65°C and dried. Thus, a glass fiber structure having metal ions incorporated therein can be obtained.

The zeolite in the invention especially preferably is synthetic zeolite (type 4A), type X, or type Y from the standpoints of adsorptivity and metal ion exchange characteristics.

The glass fiber structure of the invention desirably is one in which the glass fibers have undergone neither a glass loss nor embrittlement in the production process (treatment).

The glass fiber structure of the invention itself is excellent in deodorizing (odor-eliminating) properties, cation-exchange performance, moisture-absorbing and moisture-releasing performance, etc., and is highly functional. However, by introducing one or more kinds of metal ions selected from copper ions, silver ions, zinc ions, nickel ions, palladium ions, manganese ions, magnesium ions, calcium ions, and the like (by substitution) into the zeolite crystals as described above, various functions such as antibacterial properties, mildew-proofing properties, and antiviral activity can be imparted thereto.

In this case, the amount of the metal ions, e.g., copper ions, to be introduced is preferably 0.5-14% by mass, more preferably 7-12% by mass, based on the zeolite crystals. When the amount of the metal ions is too small, there are cases where the ions produce no effect.

Since the glass fiber structure of the invention is highly excellent in deodorizing properties, antibacterial properties, etc., it can be used in various applications such as garments (e.g.-, working clothes for use in the field of foods or hygiene), domestic articles (interior articles), sanitary material articles, environment cleaning systems, agricultural materials (aquaculture), soil hotbeds, automotive articles, articles for pets, and other industrial materials.

EXAMPLES

The invention will be explained below by reference to Examples and Comparative Examples, but the invention should not be construed as being limited to the following Examples.

[EXAMPLES AND COMPARATIVE EXAMPLES]

Ingredients (i), (ii), (iii), and (iv) were used to conduct the following operations. The amounts of these ingredients used in the Examples are shown in Table 1, and those in the Comparative Examples are shown in Table 2.

1. A mixture of (i) sodium aluminate (NA-170, manufactured by Asahi Chemical Co., Ltd.) and (iii) sodium hydroxide (48 wt% aqueous solution manufactured by Nissan Chemical Industries, Ltd.) was stirred with a magnetic stirrer (MKY-215, manufactured by Unicontrols Co., Ltd.) for several minutes (about 5 minutes) to dissolve the sodium aluminate in the sodium hydroxide solution.

2. Subsequently, while (ii) first sodium silicate (First Sodium Silicate L2, manufactured by Toso Sangyo Co., Ltd.) diluted with (iv) water was being stirred, the aqueous mixture solution containing ingredients (i) and (iii) was added thereto.

3. After the mixture was stirred for 10 minutes, 100 g of the resultant aqueous mixture solution and 2.0 g of a raw textile fabric (WEA 7628, manufactured by Nitto Boseki Co., Ltd.) were placed in a closed cylindrical vessel made of stainless steel. Using a high-temperature high-pressure dyeing tester (Labo Master, manufactured by Tsujii Dyeing Machine Manufacturing Co., Ltd.), the processing liquid was infiltrated into the raw fabric for 60 minutes and the reactants were reacted with heating at 85°C.

4. After the reaction, the fabric treated was taken out of the closed cylindrical stainless-steel vessel, washed repeatedly with 60°C hot water, and then hung and dried.

The aqueous mixture solution obtained in step 2 above was evaluated for state. In this evaluation, "low viscosity" means a viscosity value as measured at 25°C with a Brookfield viscometer of 2 mPa·s or lower.

Furthermore, the treated fabric obtained in step 4 above was evaluated for zeolite deposition rate and appearance. The zeolite deposition rate was determined by the following method.

The treated fabric which had dimensions of 10 cm x 10 cm and on which a zeolite had been yielded was immersed in 100 g of 2% aqueous citric acid solution for 3 hours. Thereafter, the treated fabric was taken out of the aqueous solution, dried, and then examined for mass. The amount of the zeolite deposited was calculated from the difference between the mass of the treated fabric before the immersion and the mass thereof after the immersion, and the deposition rate was determined therefrom.

In the evaluation of appearance, "good" means the case were the treated fabric retains the same shape as that of the unprocessed fabric, and "slightly hardened" means that state of a fabric in which the fabric cracks upon forced bending. Furthermore, "zeolite has grown into spots" means a spotty pattern which can be visually recognized clearly, and "cracking" means that the treated fabric was in a cracked state immediately after having been taken out of the closed cylindrical stainless-steel vessel and the fabric in this state readily suffers cutting or shedding because of the cracks without the necessity of receiving a high force.

[Table 1]

| | Example 1 | Example 2 | Example 3 | Example 4 | Example 5 |
|---|---|---|---|---|---|
| Composition of liquid Ingredient (i)/ (ii)/ (iii)/(iv) (% by mass) | 0.57/0.43/ 12.04/86.96 | 1.72/1.28/ 19.45/77.55 | 2.29/1.71/ 21.07/74.93 | 2.86/2.14/ 24.77/70.23 | 0.57/0.43/ 28.71/70.29 |
| Sodium hydroxide concentration (% by mass) | 6 | 10 | 11 | 13 | 14 |
| $SiO_2 + Al_2O_3$ (% by mass) | 0.23 | 0.70 | 0.94 | 1.17 | 0.23 |
| State of liquid | homo-geneous and transparent | homo-geneous and transparent | homo-geneous and transparent | homo-geneous and transparent | homo-geneous and transparent |
| Zeolite deposition rate (% by mass) | 8.5 | 8.3 | 10.6 | 9.8 | 11.9 |
| Appearance | good | good | good | good | good (slightly hardened) |

[Table 2]

| | Comparative Example 1 | Comparative Example 2 | Comparative Example 3 | Comparative Example 4 |
|---|---|---|---|---|
| Composition of liquid Ingredient (i)/(ii)/(iii)/(iv) (% by mass) | 0.1410.11/12.38/87.37 | 2.29/1.71/10.65/85.35 | 3.44/2.57/22.23/71.77 | 2.29/1.71/31.49/64.51 |
| Sodium hydroxide concentration (% by mass) | 6 | 6 | 12 | 16 |
| $SiO_2 + Al_2O_3$ (% by mass) | 0.06 | 0.94 | 1.41 | 0.94 |
| State of liquid | transparent and homogeneous | turbid | turbid | transparent and homogeneous |
| Zeolite deposition rate (% by mass) | 4.5 | 3.5 | 6.0 | 6.2 |
| Appearance | good | zeolite has grown into spots | zeolite has grown into spots | cracking |

While the invention has been described in detail and with reference to specific embodiments thereof, it will be apparent to one skilled in the art that various changes and modifications can be made therein without departing from the scope thereof.

This application is based on Japanese patent applications No. 2005-305134 filed on October 20, 2005 and Japanese patent applications No. 2006-213484 filed on August 4, 2006, the entire contents thereof being hereby incorporated by reference.

**Claims**

1. A process for producing zeolite-coated glass fibers, which comprises treating glass fibers with an aqueous solution which contains a silicon compound, an aluminum compound, and sodium hydroxide each dissolved therein, the total amount (Y) of the silicon compound and the aluminum compound in terms of silicon oxide and aluminum oxide, respectively, being 0.0703-1.6403% by mass and the sodium hydroxide concentration (X) in the aqueous solution being 4-15% by mass, the relationship between the total amount (Y) in terms of the sum of silicon oxide and aluminum oxide and the sodium hydroxide concentration (X) being represented by the following expression (I).

$$Y \leq 0.1427X - 0.5006 \qquad (I)$$

2. The process for producing zeolite-coated glass fibers according to claim 1, which comprises immersing glass fibers in the aqueous solution and then heating the glass fibers with moistening to react the silicon compound with the aluminum compound on the surface of the glass fibers and thereby yield zeolite crystals.

3. The process for producing zeolite-coated glass fibers according to claim 1 or 2, wherein the silicon compound is sodium silicate and the aluminum compound is sodium aluminate.

4. A fibrous structure made of zeolite-coated glass fibers produced by the process according to any one of claims 1 to 3, the fibrous structure being a cottony product, a yarn, a woven fabric, or a nonwoven fabric.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11217241 A
- JP 2001039740 A
- JP 2005305134 A
- JP 2006213484 A